# EUROPEAN PATENT APPLICATION

(11) **EP 2 922 007 A1**
(43) Date of publication of application: **23.09.2015**
(21) Application number: 13855602.2
(22) Date of filing: 29.10.2013
(51) Int. Cl.: G06Q 30/02, A63F 13/35, A63F 13/79, G06F 9/445

(54) **SERVER DEVICE AND SERVER PROGRAM**

(30) Priority: 15.11.2012 JP 2012251652
(71) Applicant: Kabushiki Kaisha Sega Games doing business as Sega Games Co., Ltd., Tokyo 144-8531 (JP)
(72) Inventor: ITO, Manato, Tokyo 140-8583 (JP); KUROSAWA, Hiroyuki, Tokyo 140-8583 (JP); SUZUKI, Kiyoshi, Tokyo 140-8583 (JP)
(74) Representative: Regimbeau
(86) International application number: PCT/JP2013/079300
(87) International publication number: WO 2014/077123

(57) **Abstract**

To improve a continuing rate of usage of an app that is executed on a terminal device. A server apparatus includes a banner request accepting unit that accepts, from a first application program executed by a terminal device, a banner request with a user ID that specifies a user of the terminal device; an application program selecting unit that selects, by referring to a usage history of the user specified by the user ID based on the user ID regarding an arbitrary application program, a second application program for which a predetermined period has passed after final activation thereof; and an advertising information sending unit that sends advertising information to encourage use of the second application program, corresponding to the selected second application program, to the terminal device, and has the advertising information displayed on a screen of the first application program.

## Description

### BACKGROUND OF THE INVENTION

### 1. Field of the Invention

The present invention relates to a technique by which an advertisement is displayed in an app (application program) such as a game or the like on a terminal device via a network.

### 2. Description of the Related Art

Business models have been increasing in which downloading of an app such as a game or the like itself is free, and income is obtained by selling elements such as items, characters, events, or points or the like that are used in the app and necessary to advantageously proceed the game or the like, which is the main purpose of the app.

In such apps, how to "have users continuously use the app" (for a case of a game, how to "have users continuously play the game") is becoming equally or more important than how to "have users download the app".

Meanwhile, Patent Document 1 discloses a system in which an advertisement can be selectively inserted at a specific portion of a game screen.

Further, Non-Patent Document 1 discloses a system that is a so-called "reward advertisement" in which an advertisement of a different game app B is displayed in a game app A, and items in the game that are usable in the game app A are given when the game app B is downloaded, based on the advertisement.

### [Related Documents]

### [Patent Document]

Japanese Laid-open Patent Publication No. 2000-29712

### [Non-Patent Document]

"Maxcom Asia starts providing a reward advertisement "Touch" ... corresponds to a smart-phone app or a PC game", Social Game Info, May 22, 2012, http://gamebiz.jp/?p=61093

According to the above described techniques disclosed in Patent Document 1 or in Non-Patent Document 1, although it is capable of providing a trigger to download an app, that is an advertisement target, and to start using it, it did not lead to a so-called "improvement of a continuing rate of users" for the users to continuously use the app, that is the advertisement target.

This means that even for an app that is installed and started to be used, there is almost no trigger to use it again if the usage of the app is interrupted for some reasons, and there is a problem in that a continuing rate is lower after the app has been started to be used.

### SUMMARY OF THE INVENTION

The present invention is made in light of the above problems, and its object is to improve a continuing rate of usage of an app that is executed on a terminal device.

According to an embodiment, there is provided a server apparatus including a banner request accepting unit that accepts, from a first application program executed by a terminal device, a banner request with a user ID that specifies a user of the terminal device; an application program selecting unit that selects, by referring to a usage history of the user specified by the user ID based on the user ID regarding an arbitrary application program, a second application program for which a predetermined period has passed after final activation thereof; and an advertising information sending unit that sends advertising information to encourage use of the second application program, corresponding to the selected second application program, to the terminal device, and has the advertising information displayed on a screen of the first application program.

According to the invention, it is possible to recall a user who stops using an app executed on a terminal device and to improve a continuing rate of usage of the app.

### BRIEF DESCRIPTION OF THE DRAWINGS

Fig. 1 is a view illustrating an example of a structure of a system of an embodiment;
Fig. 2 is a view illustrating an example of a data structure of a user management DB;
Fig. 3 is a view illustrating an example of a data structure of an app priority point DB;
Fig. 4 is a view illustrating an example of a data structure of an app excluding list DB;
Fig. 5 is a view illustrating an example of a data structure of a banner display history DB;
Fig. 6 is a view illustrating an example of a data structure of an app usage history DB;
Fig. 7 is a view illustrating an example of a data structure of a banner selection table;
Fig. 8 is a view illustrating an example of a data structure of a banner DB;
Fig. 9 is a view illustrating an example of a normal banner;
Fig. 10 is a view illustrating an example of a retention banner;
Fig. 11 is a view illustrating an example of a data structure of a charged history DB;
Fig. 12 is a view illustrating an example of a hardware structure of a terminal device;
Fig. 13 is a view illustrating an example of a hardware structure of each of various servers;
Fig. 14 is a sequence diagram (No. 1) illustrating an example of processes of the embodiment;
Fig. 15 is a view (No. 1) illustrating an example of a retention banner displayed on an app screen;
Fig. 16 is a view (No. 2) illustrating an example of a retention banner displayed on an app screen; and
Fig. 17 is a sequence diagram (No. 2) illustrating an example of processes of the embodiment.

### DETAILED DESCRIPTION OF THE PREFERRED EMBODIMENTS

The preferred embodiments of the invention are explained in the following.

### (Structure)

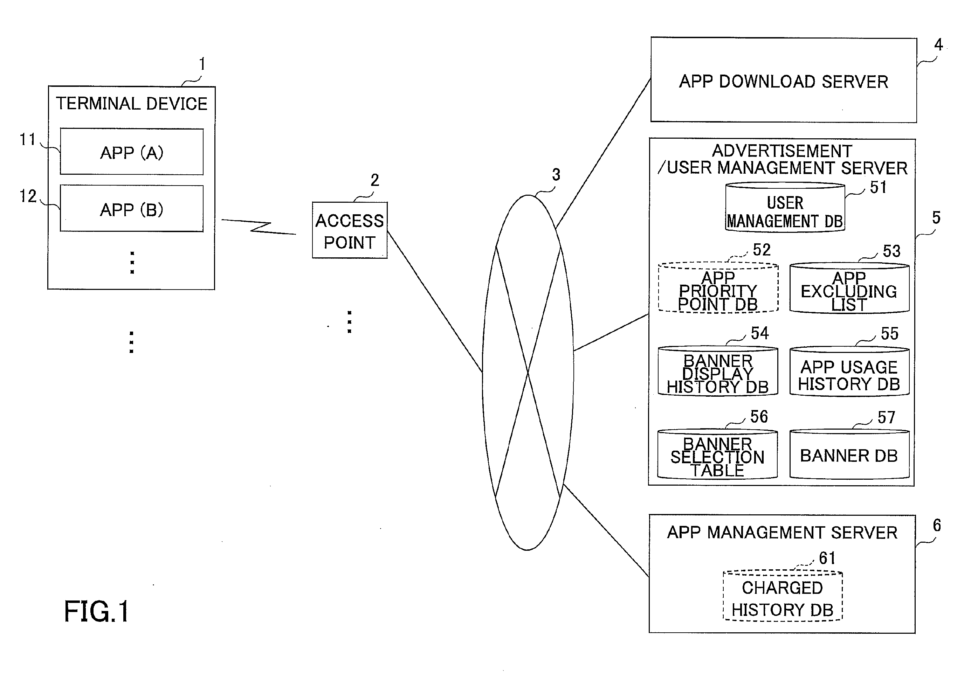

Fig. 1 is a view illustrating an example of a structure of a system of an embodiment. Although a game app is mainly exemplified as an app (application program), it is needless to say that the embodiments can be applied to apps other than game apps.

In Fig. 1, the system includes terminal devices 1 such as a smartphone, a mobile phone or the like possessed by users (players), access points 2 such as a mobile station, a Wi-Fi station or the like, a network 3 such as INTERNET or the like and various servers 4 to 6.

Although it is assumed that the terminal device 1 includes an app (A) 11 and an app (B) 12, the terminal device 1 may further include other apps.

The apps 11 and 12 respectively have functions to execute predetermined games, for example. The apps 11 and 12 respectively have functions to act as browsers by a browser function in the apps as sell.

An app download server 4 stores programs that are master copies of the apps 11 and 12 or the like, and has a function to have them downloaded and installed in the terminal device 1.

An advertisement/user management server 5 horizontally manages a plurality of apps and their users, and has a function to control display of an advertisement (advertising banner) regarding another app (regardless of whether the app is installed in the terminal device 1 or not) in an app executed in the terminal device 1. The app applicable to the service provided by the advertisement/user management server 5 internally stores a user ID that is common as the one managed by the advertisement/user management server 5 under a status that the app is installed in the terminal device 1 and is initially set, and sends the user ID in accordance with necessity when accessing the server.

The advertisement/user management server 5 manages a value called a "priority point" for each of the apps, and when an advertisement of another app (Y) is displayed in an app (X) and a user is led (install, activate or the like) to the other app (Y), adds predetermined values to the priority point of the app (X) that displayed the advertisement. Then, the advertisement/user management server 5 structures a reasonable advertisement system that can be operated without paying or receiving displaying fees between venders of apps by preferentially displaying the advertisement of the app whose priority points are large in other apps. For example, when the user of the app (X) is led to the other app (Y) by displaying the advertisement of the app (Y) in the app (X), it means that, directly, the app (X) that is originally displayed loses the user as the user moves to the other app (Y). However, as the priority points are added, the advertisement of the app (X) is displayed in many apps and it can be expected that new users can be obtained that exceed the number of lost users so that it becomes an incentive to positively display advertisements of other apps in its own app.

The advertisement/user management server 5 includes a user management DB 51, an app priority point DB 52, an app excluding list DB 53, a banner display history DB 54, an app usage history DB 55, a banner selection table 56 and a banner DB 57 as databases (DB) or the like to be used for the processes.

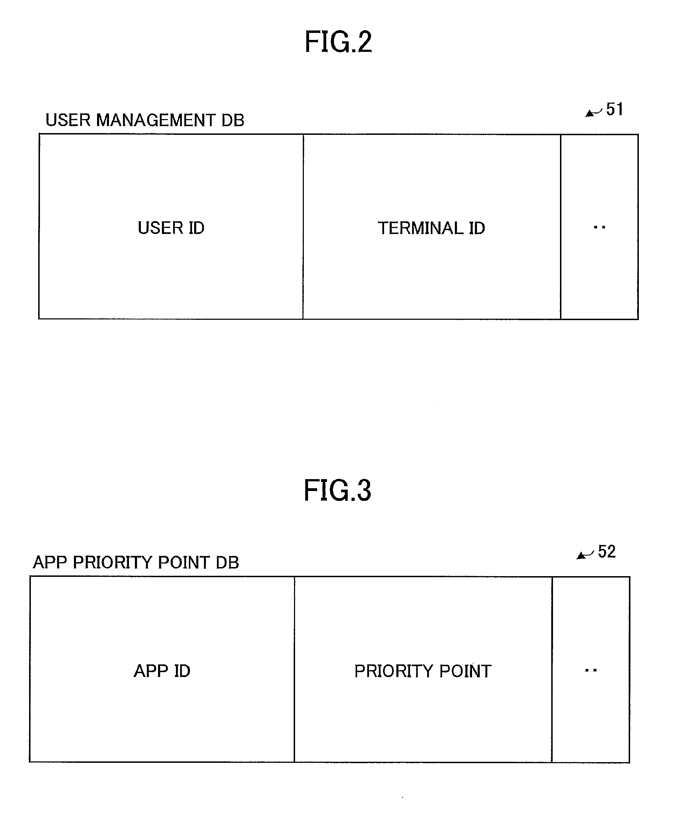

Fig. 2 is a view illustrating an example of a data structure of the user management DB 51, and includes items (fields) such as "user ID", "terminal ID" or the like. The "user ID" is data to specify the user. The "terminal ID" is data to specify the terminal device 1 used by the user.

Fig. 3 is a view illustrating an example of a data structure of the app priority point DB 52, and includes items such as "app ID", "priority point" or the like. The "app ID" is data to specify the app. The "priority point" is values that become a reference to determine the priority order for displaying the advertisement of the app.

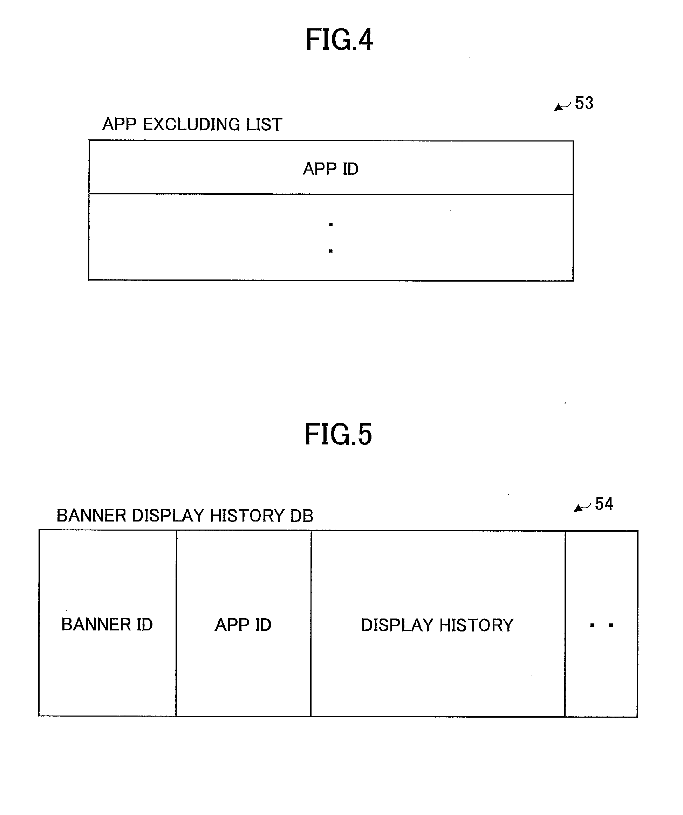

Fig. 4 is a view illustrating an example of a data structure of the app excluding list DB 53 in which "app IDs" that are information for identifying apps are listed.

Fig. 5 is a view illustrating an example of a data structure of the banner display history DB 54, and includes items such as "banner ID", "app ID", "display history" or the like. The "banner ID" is data to specify the advertising banner. Although the advertising banner includes a general normal banner that recommends to install and activate an app and a retention banner that prompts a user, who had not used (activated) an app for a predetermined period after installing and activating, to use (activate) the app again, advertising banners of other types may be provided. The retention banner is configured to give items, points or the like by which the user can advantageously proceed the game or the like in the app as a reward so that it becomes an incentive for the user to use the app again. As it is considered that the user who had activated the app sufficiently recognizes the value of the reward, it is expected that the effect of the incentive by the reward is high. The "app ID" is data to specify the app corresponding to the advertising banner. The "display history" is a history of displaying the advertising banner, and includes date information on which it is displayed and a user ID to which it is displayed.

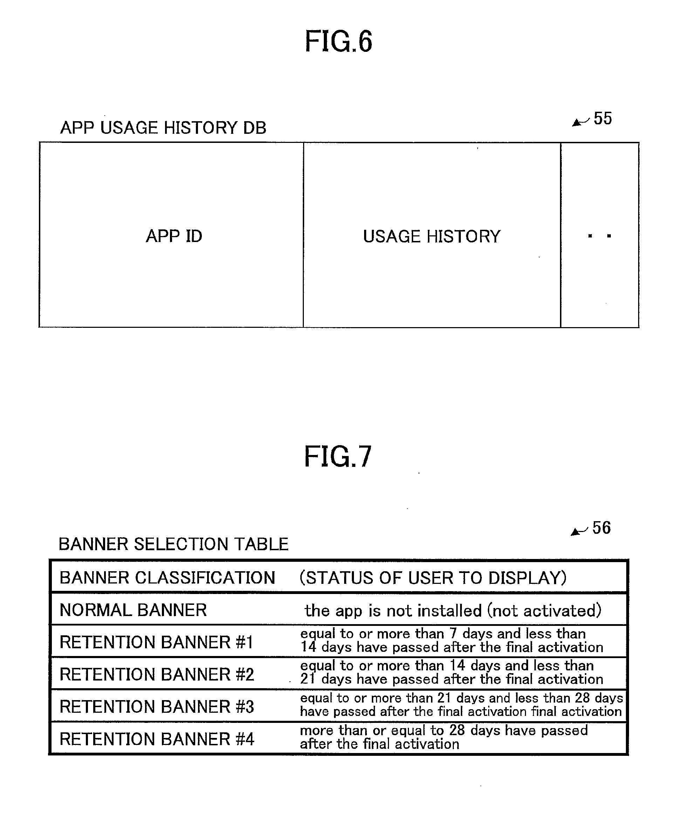

Fig. 6 is a view illustrating an example of a data structure of the app usage history DB 55, and includes items such as "app ID", "usage history" or the like. The "app ID" is data to specify the app. The "usage history" is a history of usage of the app and includes a kind whether installed or activated, a user ID for specifying the user who used it and date information on which it is used. To the "usage history", date information on which the app is activated is added every time the app is activated. For implementation, usage history of an app (app ID) of a user may be corresponded with the user (user ID), and the usage history for each of the apps may be obtained from there.

Fig. 7 is a view illustrating an example of a data structure of the banner selection table 56 in which banner classifications are set in accordance with statuses of a user to whom the banner is to be displayed. For the illustrated example, a "normal banner" is set when the app is not installed (not activated), a "retention banner #1" is set when equal to or more than 7 days and less than 14 days have passed after the final activation, a "retention banner #2" is set when equal to or more than 14 days and less than 21 days have passed after the final activation, a "retention banner #3" is set when equal to or more than 21 days and less than 28 days have passed after the final activation, and a "retention banner #4" is set when more than or equal to 28 days have passed after the final activation. The rewards are set to become higher in the order from "retention banner #1", the "retention banner #2", the "retention banner #3" and the "retention banner #4". This is from an idea that it may be difficult to have the user use the app again unless the higher incentive is given as the period from the final activation becomes longer. Here, the number of days in the illustrated example may be arbitrarily changed in accordance with an operation. The content of the reward may also be arbitrarily changed in accordance with an operation.

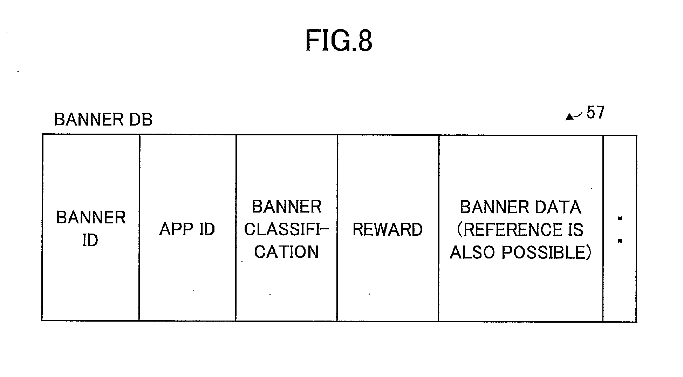

Fig. 8 is an example of a data structure of the banner DB 57, and includes items such as "banner ID", "app ID", "banner classification", "reward", "banner data" or the like. The "banner ID" is data to specify the advertising banner. The "app ID" is data to specify the app corresponding to the advertising banner. The "banner classification" is data indicating a classification of the advertising banner. The "reward" is data indicating the content of the reward when the reward is corresponded with the advertising banner. The "banner data" is a data body of the advertising banner or reference data for a stored place of the advertising banner. The banner data includes a description for accessing the app download server 4 when the advertising banner is selected (tapped, clicked) or a description (URL scheme or the like, which will be explained later) for activating the app that is already installed in the terminal device 1.

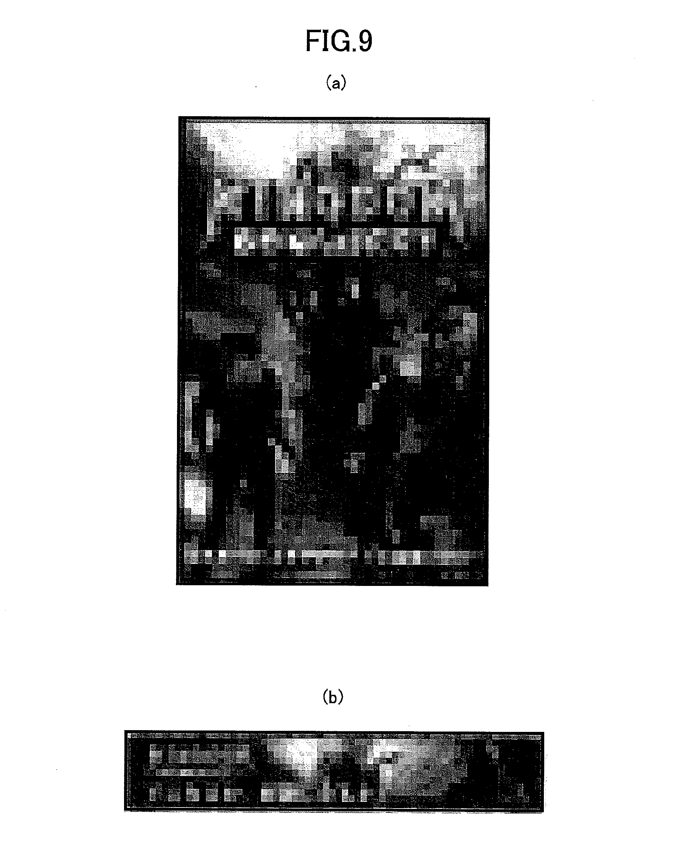

Fig. 9 is a view illustrating an example of a normal banner wherein Fig. 9-(a) is an example of a large-size normal banner and Fig. 9-(b) is an example of a small-size normal banner.

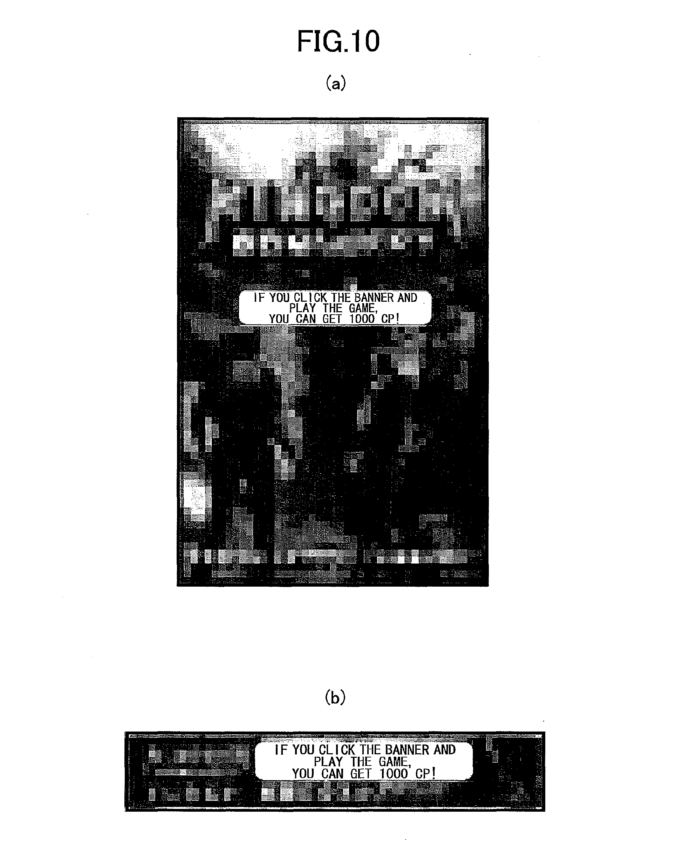

Fig. 10 is a view illustrating an example of a retention banner wherein Fig. 10-(a) is an example of a large-size retention banner and Fig. 10-(b) is an example of a small-size retention banner. The retention banner includes a display that announces the content of the reward such as "if you click the banner and play the game, you can get 1000 CP!".

Referring back to Fig. 1, although the app priority point DB 52, the app excluding list DB 53, the banner display history DB 54, the app usage history DB 55, the banner selection table 56 and the banner DB 57 are illustrated as different databases or the like for an explanation purpose, for implementation, these may be structured as a single database or the arbitrary numbers of databases or the like.

The app management server 6 has a function to manage log-in or statuses of the apps 11 and 12 or the like. In particular, when it is accessed by the app activated in accordance with a selection of a retention banner, the app management server 6 has a function to control giving or the like of the reward.

Here, the app management server 6 may be separately provided for each of the apps. Further, when the advertisement/user management server 5 and the app management server 6 are operated by the same organization, the advertisement/user management server 5 and the app management server 6 may be placed in the same server apparatus.

Further, the app management server 6 includes a charged history DB 61 that manages charged data of each of the users.

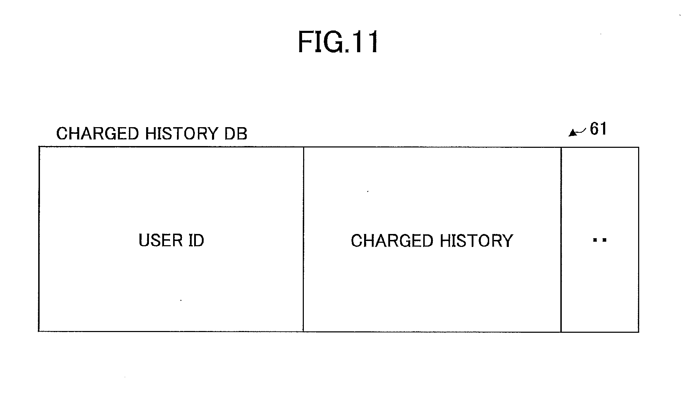

Fig. 11 is a view illustrating an example of a data structure of the charged history DB 61, and includes items such as "user ID", "charged data" or the like. The "user ID" is data to specify the user. The "charged data" is a history of past charged amount of the user, and includes an app ID that specifies the used app, charged amount and charged date information.

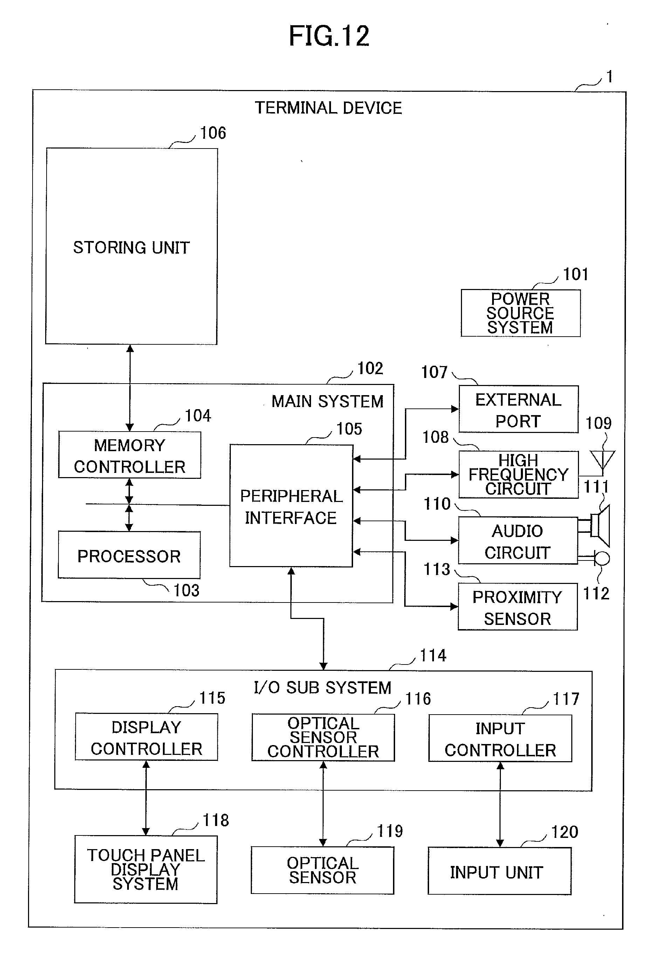

Fig. 12 is a view illustrating an example of a hardware structure of the terminal device 1.

In Fig. 12, the terminal device 1 includes a power source system 101, a main system 102 including a processor 103, a memory controller 104 and a peripheral interface 105, a storing unit 106, an external port 107, a high frequency circuit 108, an antenna 109, an audio circuit 110, a speaker 111, a microphone 112, a proximity sensor 113, an I/O (Input/Output) sub system 114 including a display controller 115, an optical sensor controller 116 and an input controller 117, a touch panel display system 118, an optical sensor 119 and an input unit 120.

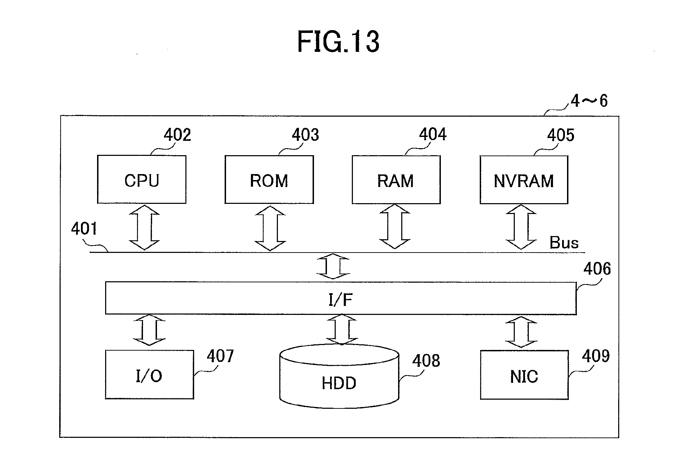

Fig. 13 is a view illustrating an example of a hardware structure of each of the various servers 4 to 6.

In Fig. 13, each of the servers 4 to 6 includes a CPU (Central Processing Unit) 402, a ROM (Read Only Memory) 403, a RAM (Random Access Memory) 404, an NVRAM (Non-Volatile Random Access Memory) 405 and an I/F (Interface) 406 connected to a system bus 401, an I/O (Input/Output device) 407 for a keyboard, a mouse, a monitor, a CD/DVD (Compact Disk/Digital Versatile Disk) drive or the like, an HDD (Hard Disk Drive) 408 and an NIC (Network Interface Card) 409 connected to the I/F 406, or the like.

### (Operation)

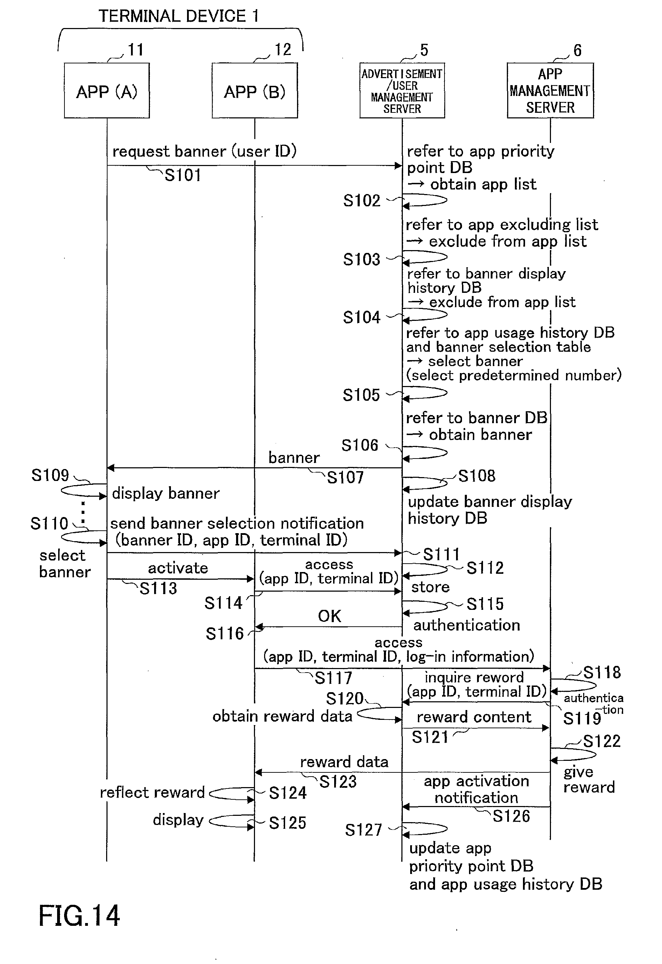

Fig. 14 is a sequence diagram illustrating an example of processes of the above described embodiment.

In Fig. 14, the app 11 sends a banner request with a user ID to an address of the advertisement/user management server 5 that is previously set in the app 11, at timing at which the app 11 is activated in the terminal device 1, at timing at which being switched to a home screen or the like (step S101).

Upon accepting the banner request from the app 11, the advertisement/user management server 5 refers to the app priority point DB 52 and obtains an app list in which app IDs are raised in a descending order of the priority points (step S102).

Next, the advertisement/user management server 5 refers to the app excluding list DB 53 and excludes the app ID(s) that is registered in the app excluding list DB 53, from the app IDs raised in the app list (step S103).

Next, the advertisement/user management server 5 refers to the banner display history DB 54 based on the user ID sent with the banner request and excludes the app ID(s) corresponding to the advertising banner(s) that is displayed for a predetermined time within a predetermined period for the user specified by the user ID, from the app IDs raised in the app list (step S104).

Next, the advertisement/user management server 5 refers to the app usage history DB 55 and the banner selection table 56 based on the app ID obtained from the highest rank of the app list and the user ID sent with the banner request, and selects a predetermined number (5, for example) of advertising banners (step S105). This means that the advertisement/user management server 5 refers to the usage history of the highest ranked app ID of the app list for the user of the user ID, and when following the banner selection table 56 in Fig. 7, the "normal banner" is selected when the app is not installed (not activated) (when there is no history of installed or activated), the "retention banner #1" is selected when equal to or more than 7 days and less than 14 days have passed after the final activation, the "retention banner #2" is selected when equal to or more than 14 days and less than 21 days have passed after the final activation, the "retention banner #3" is selected when equal to or more than 21 days and less than 28 days have passed after the final activation, and the "retention banner #4" is selected when more than or equal to 28 days have passed after the final activation, as the banner classification. When the app does not correspond to any of these (equal to or less than 6 days have passed after the final activation), the advertising banner (banner classification) is not selected for the app ID. Similarly, the advertisement/user management server 5 performs the processes for the next ranked app ID, and continues these processes until the predetermined number of advertising banners are selected.

Next, the advertisement/user management server 5 obtains the banner data from the banner DB 57 based on the selected predetermined number of advertising banners (app ID, banner classification) (step S106), and sends the banner data to the app 11 of the terminal device 1 that sent the banner request (step S107).

Thereafter, the advertisement/user management server 5 updates the display history of the banner display history DB 54 for the advertising banner for which the banner data is sent (step S108). Here, this update of the display history may be performed right after the banner is selected (step S105).

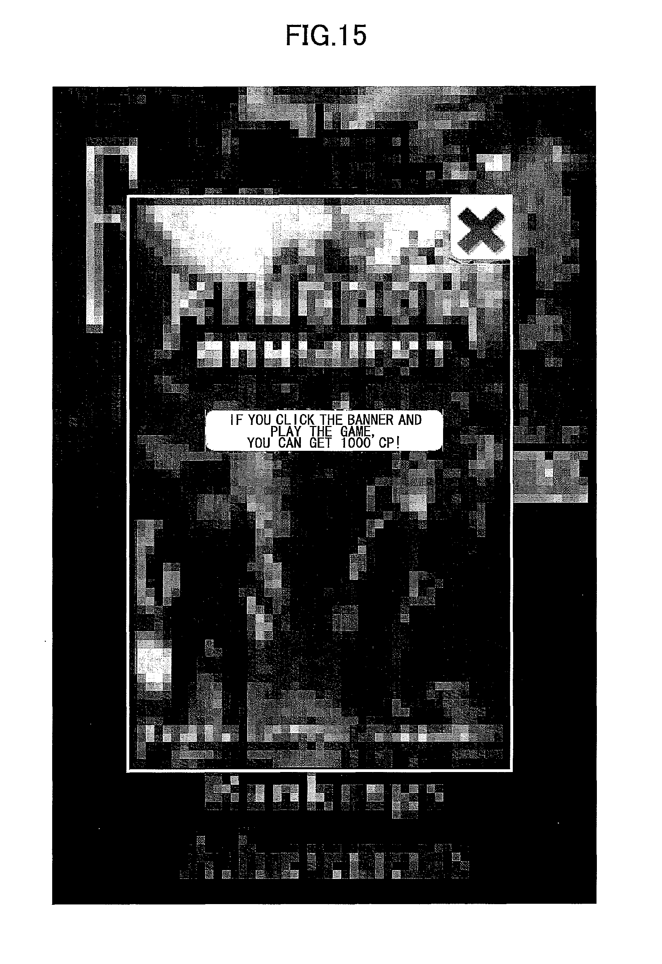

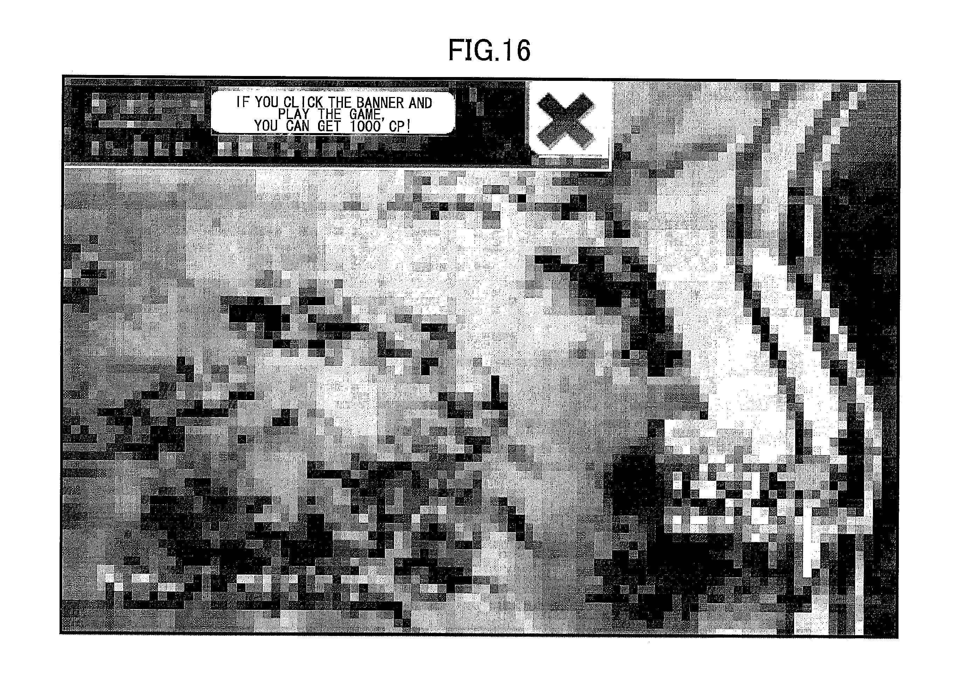

Meanwhile, the app 11 of the terminal device 1 that receives the banner data displays the advertising banner on a screen of the app 11 (step S109). Fig. 15 is a view illustrating an example in which a large-size advertising banner is displayed at a center of the screen. Fig. 16 is a view illustrating an example in which a small-size advertising banner is displayed at a left-upper corner of the screen.

Referring back to Fig. 14, it is assumed that the user of the terminal device 1 selects the advertising banner displayed on the screen of the app 11 (step S110), and it is assumed that the advertising banner is a retention banner of the app 12 that is already installed in the terminal device 1.

At this time, the app 11 sends a banner selection notification with the banner ID, the app ID, the terminal ID and the like to the previously known address of the advertisement/user management server 5 based on the description such as a script or the like included in the retention banner (step S111). Upon accepting it, the advertisement/user management server 5 stores it in an inside memory area (step S112).

Next, the app 11 activates the app 12 based on the description such as a URL scheme or the like included in the retention banner (step S113). Here, the URL scheme is provided by a browser function of the terminal device 1, and is a mechanism that activates a corresponding app by appointing a URL scheme composed of a character string of a URL specific to the app and a parameter added in accordance with necessity, similarly as a URL for a Web access.

Here, when the target app of the retention banner is deleted from the terminal device 1, it is impossible to activate the app. Thus, in such a case, the app download server 4 is similarly accessed by the URL scheme or the like, and the app is downloaded and installed after being confirmed by the user, and thereafter, the user manually activates the app 11.

The activated app 12 accesses the advertisement/user management server 5 for log-in based on the address previously set in the app 12 (step S114). This access includes the app ID, the terminal ID and the like. Upon accepting it, the advertisement/user management server 5 performs an authentication by confirming whether the terminal ID is registered in the user management DB 51 (step S115), and when the authentication is normally performed, responds it (step S116).

Next, the app 12 accesses the app management server 6 for log-in based on the address previously set in the app 12 (step S117). At this time, the app ID, the terminal ID and log-in information (user ID, password or the like) are sent together.

The accessed app management server 6 performs an authentication of the user based on the log-in information (step S118), and when the user is normally authenticated, inquires the advertisement/user management server 5 for the reward with the app ID and the terminal ID (step S119).

Upon accepting it, after confirming whether a combination of the app ID and the terminal ID matches the previously stored one upon accepting the banner selection notification (step S111), the advertisement/user management server 5 obtains the corresponding reward content from the banner DB 57 (step S120) and responds the reward content to the app management server 6 (step S121).

Upon accepting it, the app management server 6 gives the reward to the app 12 of the terminal device 1 (step S122). Giving of the reward includes generating and obtaining of reward data that is used at the terminal device 1 side in order to reflect the reward, and updating of a record or the like when the giving of the reward is recorded as a history of the user.

The app management server 6 sends the reward data to the app 12 of the terminal device 1 (step S123), and the app 12 reflects the reward based on the accepted reward data (step S124). For example, items are added, capability values are increased or the like by updating the game management data.

When the reward is reflected, the app 12 displays that the reward is reflected (step S125). This notification of notifying that the reward is reflected may be performed by voice or the like.

Further, the app management server 6 notifies the advertisement/user management server 5 that the app 12 is activated (step S126), and upon accepting this, the advertisement/user management server 5 updates the app priority point DB 52 and the app usage history DB 55 (step S127). This means that as the user is led to activate the app 12 by displaying the retention banner in the app 11, the advertisement/user management server 5 adds the predetermined priority points for the app 11 in the app priority point DB 52. Further, the advertisement/user management server 5 updates the latest activation history of the app 12 by adding the time when the advertisement/user management server 5 accepts the notification from the app management server 6 in the app usage history DB 55.

Here, for the case when the normal banner is displayed in the app 11, upon selection of the normal banner, the app download server 4 is accessed and the app is downloaded and installed after the confirmation by the user.

Further, for an alternative example of the above described processes, when referring to the app priority point DB 52 (step S102), the advertisement/user management server 5 may refer to the charged history DB 61 of the app management server 6, and change the order of the apps (app IDs) in the app list by taking the charged amount of the user of the terminal device 1 (specified by the user ID sent with the banner request) into account. For example, the order is re-determined based on values obtained by adding multiplied values of the charged amount with a coefficient to the priority points. With this, a retention banner of the app, into which the user put money past, can be prioritized as a target app to be displayed, and improvement of sales can be expected after the user is recalled.

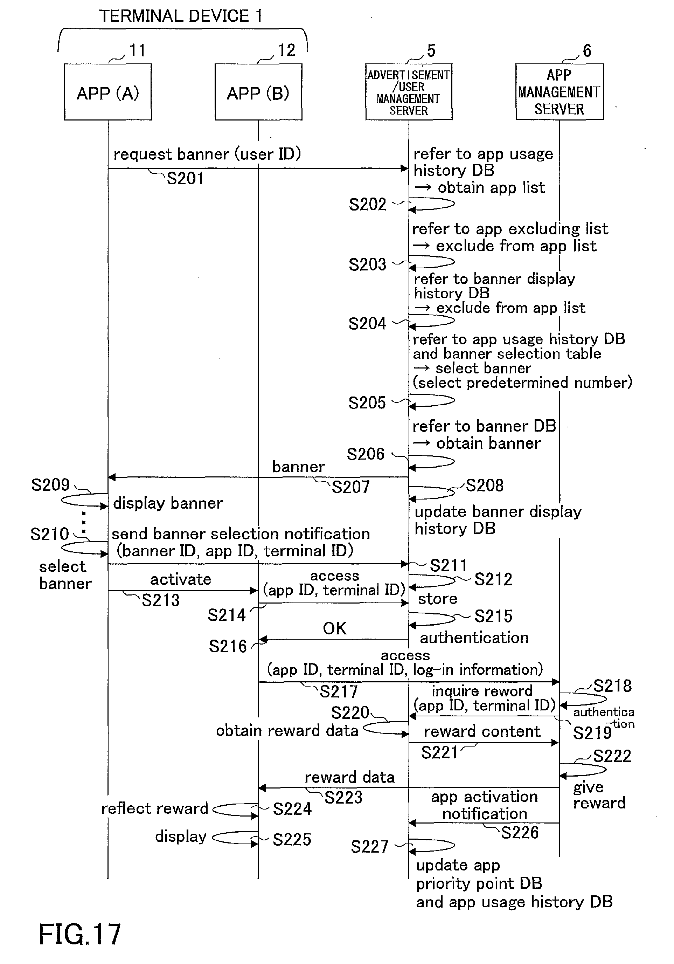

Fig. 17 is a sequence diagram illustrating another example of processes of the above described embodiment. The processes of Fig. 17 are different from those illustrated in Fig. 14 in that the app priority point DB 52 is not used.

In Fig. 17, the app 11 sends a banner request with a user ID to an address of the advertisement/user management server 5 that is previously set in the app 11, at timing at which the app 11 is activated in the terminal device 1, at timing at which being switched to a home screen or the like (step S201).

Upon accepting the banner request from the app 11, the advertisement/user management server 5 refers to the app usage history DB 55 based on the user ID sent with the banner request and obtains an app list in which app IDs are raised in a descending order of the elapsed periods after the final activation in the usage history of the user ID app ID (step S202). When a sufficient number of apps are not raised from the usage history of the user ID, the app list is obtained from a group of apps that are previously prepared as a default.

Next, the advertisement/user management server 5 refers to the app excluding list DB 53 and excludes the app ID(s) that is registered in the app excluding list DB 53, among the app IDs raised in the app list (step S203).

Next, the advertisement/user management server 5 refers to the banner display history DB 54 based on the user ID sent with the banner request and excludes the app ID(s) corresponding to the advertising banner(s) that is displayed for a predetermined time within a predetermined period for the user specified by the user ID, from the app IDs raised in the app list (step S204).

Next, the advertisement/user management server 5 refers to the app usage history DB 55 and the banner selection table 56 based on the app ID obtained from the highest rank of the app list and the user ID sent with the banner request, and selects a predetermined number (5, for example) of advertising banners (step S205). This means that the advertisement/user management server 5 refers to the usage history of the highest ranked app ID of the app list for the user of the user ID, and when following the banner selection table 56 in Fig. 7, the "normal banner" is selected when the app is not installed (not activated) (when there is no history of installed or activated), the "retention banner #1" is selected when equal to or more than 7 days and less than 14 days have passed after the final activation, the "retention banner #2" is selected when equal to or more than 14 days and less than 21 days have passed after the final activation, the "retention banner #3" is selected when equal to or more than 21 days and less than 28 days have passed after the final activation, and the "retention banner #4" is selected when more than or equal to 28 days have passed after the final activation, as the banner classification. When the app does not correspond to any of these (equal to or less than 6 days have passed after the final activation), the advertising banner (banner classification) is not selected for the app ID. Similarly, the advertisement/user management server 5 performs the processes for the next ranked app ID, and continues these processes until the predetermined number of advertising banners are selected.

Next, the advertisement/user management server 5 obtains the banner data from the banner DB 57 based on the selected predetermined number of advertising banners (app ID, banner classification) (step S206), and sends the banner data to the app 11 of the terminal device 1 that sent the banner request (step S207).

Thereafter, the advertisement/user management server 5 updates the display history of the banner display history DB 54 for the advertising banner for which the banner data is sent (step S208). Here, this update of the display history may be performed right after the banner is selected (step S205).

Meanwhile, the app 11 of the terminal device 1 that receives the banner data displays the advertising banner on a screen of the app 11 (step S209).

Next, it is assumed that the user of the terminal device 1 selects the advertising banner displayed on the screen of the app 11 (step S210), and it is assumed that the advertising banner is a retention banner of the app 12 that is already installed in the terminal device 1.

At this time, the app 11 sends a banner selection notification with the banner ID, the app ID, the terminal ID and the like to the previously known address of the advertisement/user management server 5 based on the description such as a script or the like included in the retention banner (step S211). Upon accepting it, the advertisement/user management server 5 stores it in an inside memory area (step S212).

Next, the app 11 activates the app 12 based on the description such as a URL scheme or the like included in the retention banner (step S213).

Here, when the target app of the retention banner is deleted from the terminal device 1, it is impossible to activate the app. Thus, in such a case, the app download server 4 is similarly accessed by the URL scheme or the like, and the app is downloaded and installed after being confirmed by the user, and thereafter, the user manually activates the app 11.

The activated app 12 accesses the advertisement/user management server 5 for log-in based on the address previously set in the app 12 (step S214). This access includes the app ID, the terminal ID and the like. Upon accepting it, the advertisement/user management server 5 performs an authentication by confirming whether the terminal ID is registered in the user management DB 51 (step S215), and when the authentication is normally performed, responds it (step S216).

Next, the app 12 accesses the app management server 6 for log-in based on the address previously set in the app 12 (step S217). At this time, the app ID, the terminal ID and log-in information (user ID, password or the like) are sent together.

The accessed app management server 6 performs an authentication of the user based on the log-in information (step S218), and when the user is normally authenticated, inquires the advertisement/user management server 5 for the reward with the app ID and the terminal ID (step S219).

Upon accepting it, after confirming whether a combination of the app ID and the terminal ID matches the previously stored one upon accepting the banner selection notification (step S211), the advertisement/user management server 5 obtains the corresponding reward content from the banner DB 57 (step S220), and responds the reward content to the app management server 6 (step S221).

Upon accepting it, the app management server 6 gives the reward to the app 12 of the terminal device 1 (step S222). Giving of the reward includes generating and obtaining of reward data that is used at the terminal device 1 side in order to reflect the reward, and updating of a record or the like when the giving of the reward is recorded as a history of the user.

The app management server 6 sends the reward data to the app 12 of the terminal device 1 (step S223), and the app 12 reflects the reward based on the accepted reward data (step S224). For example, items are added, capability values are increased or the like by updating the game management data.

When the reward is reflected, the app 12 displays that the reward is reflected (step S225). This notification of notifying that the reward is reflected may be performed by voice or the like.

Further, the app management server 6 notifies the advertisement/user management server 5 that the app 12 is activated (step S226), and upon accepting this, the advertisement/user management server 5 updates the app priority point DB 52 and the app usage history DB 55 (step S227). This means that as the user is led to activate the app 12 by displaying the retention banner in the app 11, the advertisement/user management server 5 adds the predetermined priority points for the app 11 in the app priority point DB 52. Further, the advertisement/user management server 5 updates the latest activation history of the app 12 by adding the time when the advertisement/user management server 5 accepts the notification from the app management server 6 in the app usage history DB 55.

Here, for the case when the normal banner is displayed in the app 11, upon selection of the normal banner, the app download server 4 is accessed and the app is downloaded and installed after the confirmation by the user.

Further, for an alternative example of the above described processes, instead of referring to the app usage history DB 55 (step S202), the advertisement/user management server 5 may refer to the charged history DB 61 of the app management server 6 and obtain an app list in which app IDs are raised in a descending order of the charged amounts of the user of the terminal device 1 (specified by the user ID sent with the banner request). With this, a retention banner of the app, into which the user put money past, can be prioritized as a target app to be displayed, and improvement of sales can be expected after the user is recalled.

Further, when referring to the app usage history DB 55 (step S202), the advertisement/user management server 5 may refer to the charged history DB 61 of the app management server 6, and change the order of the apps (app IDs) in the app list by taking the charged amount of the user of the terminal device 1 (specified by the user ID sent with the banner request) into account. For example, the order is re-determined based on values obtained by adding multiplied values of the charged amount with a coefficient to the elapsed period. At this time as well, a retention banner of the app, into which the user put money past, can be prioritized as a target app to be displayed, and improvement of sales can be expected after the user is recalled.

Further, although it is assumed that the reward is given for the corresponding app 12 only when the retention banner displayed on the terminal device 1 is selected (tapped, clicked) in the examples of the processes of Fig. 14 and Fig. 17, the reward may be given when the app 12 is activated thereafter, without having the retention banner being selected (the explanation of the retention banner is changed to, for example, "You, who see this banner, can get 1000 CP by playing the game!"). At this time, by storing the terminal device 1 that displays the retention banner and the banner ID in correspondence with each other at the advertisement/user management server 5 side, the advertisement/user management server 5 can respond the reward content when accepting the reward inquiry from the app management server 6.

Further, in Fig. 14 and Fig. 17, the date when the banner selection notification is accepted (step S111, S211) may be also stored (step S112, S212), the date may be referred at the confirmation to the reward inquiry (step S120, S220), and the reward may be given only when it is within a predetermined period (24 hours, for example) from the banner selection.

Here, although a case in which the processes are mainly performed by the advertisement/user management server 5 is explained in the above explained examples of the processes of Fig. 14 and Fig. 17 and in the alternative examples, the app 11 of the terminal device 1 may perform the main processes by obtaining necessary information (information of the app usage history, information of the charged history or the like, for example) from the advertisement/user management server 5 or the app management server 6.

### (Summary)

As described above, according to the embodiment, it is possible to recall a user who stopped using an app executed on a terminal device, and a continuing rate of usage of the app can be improved.

The present invention has been explained by preferred embodiments. Although the present invention is explained by showing specific examples, it is to be understood that minor modifications may be made on such specific examples without departing from the spirit and scope of the invention as defined by the claims. In other words, the present invention should not be interpreted to be limited by the detail of the specific examples and accompanying drawings.
- 1: terminal device
- 11, 12: app
- 2: access point
- 3: network
- 4: app download server
- 5: advertisement/user management server
- 51: user management DB
- 52: app priority point DB
- 53: app excluding list DB
- 54: banner display history DB
- 55: app usage history DB
- 56: banner selection table
- 57: banner DB
- 6: app management server
- 61: charged history DB

## Claims

1. A server apparatus comprising:
a banner request accepting unit that accepts, from a first application program executed by a terminal device, a banner request with a user ID that specifies a user of the terminal device;
an application program selecting unit that selects, by referring to a usage history of the user specified by the user ID based on the user ID regarding an arbitrary application program, a second application program for which a predetermined period has passed after final activation thereof; and
an advertising information sending unit that sends advertising information to encourage use of the second application program, corresponding to the selected second application program, to the terminal device, and has the advertising information displayed on a screen of the first application program.

2. The server apparatus according to claim 1, further comprising:
a unit that instructs, upon accepting a log-in from the second application program activated by a description included in the advertising information by a selection of the advertising information, to give a reward corresponding to the advertising information.

3. The server apparatus according to claim 1, further comprising:
a unit that instructs, upon accepting a log-in from the second application program after displaying the advertising information, to give a reward corresponding to the advertising information.

4. The server apparatus according to claim 2 or 3, wherein the reward is set such that the longer the predetermined period from the final activation of the second application program is, the higher the value becomes.

5. The server apparatus according to any one of claims 1 to 4, further comprising:
a list obtaining unit that obtains a list of application programs in which the application programs are raised in a descending order of the priority points of the application programs, respectively, and
wherein the application program selecting unit selects the second application program from a higher ranked application program of the list.

6. The server apparatus according to any one of claims 1 to 4, further comprising:
a list obtaining unit that obtains a list of application programs in a descending order based on predetermined periods from a final activation of the application programs, respectively, of the user specified by the user ID, and
wherein the application program selecting unit selects the second application program from a higher ranked application program of the list.

7. The server apparatus according to any one of claims 1 to 4, further comprising:
a list obtaining unit that obtains a list of application programs in a descending order based on past charged amounts of the application programs, respectively, of the user specified by the user ID, and
wherein the application program selecting unit selects the second application program from a higher ranked application program of the list.

8. The server apparatus according to claim 5 or 6, further comprising:
a list updating unit that reflects the past charged amounts of the application programs, respectively, of the user specified by the user ID to the order of the list.

9. The server apparatus according to any one of claims 1 to 8, further comprising:
a unit that excludes an application program that is not a target for the advertising information, from the application programs from which the second application program is to be selected.

10. The server apparatus according to any one of claims 1 to 9, further comprising:
a unit that excludes an application program that is a target for the advertising information but displayed for the user specified by the user ID for a predetermined time within a latest predetermined period, from the application programs from which the second application program is to be selected.

11. A server program for a computer constituting a server apparatus to execute functions comprising:
a banner request accepting function that accepts, from a first application program executed by a terminal device, a banner request with a user ID that specifies a user of the terminal device;
an application program selecting function that selects, by referring to a usage history of the user specified by the user ID based on the user ID regarding an arbitrary application program, a second application program for which a predetermined period has passed after final activation thereof; and
an advertising information sending function that sends advertising information to encourage use of the second application program, corresponding to the selected second application program, to the terminal device, and has the advertising information displayed on a screen of the first application program.
